(19) Europäisches Patentamt
European Patent Office
Office européen des brevets

(11) EP 0 780 416 A1

(12) EUROPÄISCHE PATENTANMELDUNG

(43) Veröffentlichungstag:
**25.06.1997 Patentblatt 1997/26**

(21) Anmeldenummer: **96116397.9**

(22) Anmeldetag: **12.10.1996**

(51) Int. Cl.[6]: **C08G 18/64**, C08G 18/42, C08G 18/48, C08G 18/79, C08G 18/80, C09D 5/46

(84) Benannte Vertragsstaaten:
**AT CH DE FR GB IT LI NL**

(30) Priorität: **18.12.1995 DE 19547205**

(71) Anmelder: **HÜLS AKTIENGESELLSCHAFT**
**45764 Marl (DE)**

(72) Erfinder: **Wolf, Elmar, Dr.**
**45661 Recklinghausen (DE)**

# (54) Pulverlack und seine Verwendung zur Beschichtung von hitzeresistenten Substraten

(57) Pulverlack, enthaltend im wesentlichen ein Gemisch aus

A) einer pulverförmigen, unterhalb 50 °C festen und oberhalb 160 °C flüssigen Polyisocyanatkomponente der Formel I

EP 0 780 416 A1

$$R\!-\!\!\left[R^1-NCO\right]_n \quad (I),$$

wobei R: a) 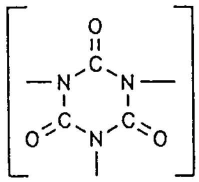 ;

b) 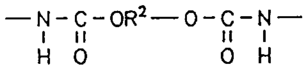 mit $R^2$: $C_2$–$C_{12}$–(Cyclo)–alkylen;

c) 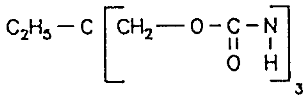 ;

d) 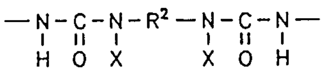 mit X : H und/oder $C_1$–$C_{12}$–(Cyclo)–alkyl;

$R^1$: 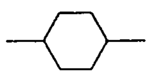 , 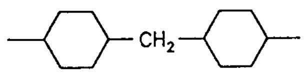 ;

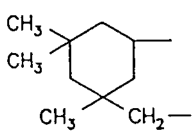 , 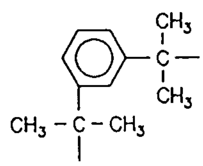 ;

und n: 2 – 5 bedeuten,

B) einer pulverförmigen, unterhalb 50 °C festen und oberhalb 160 °C flüssigen organischen Polyhydroxylkomponente, bei der das Verhältnis von sekundären zu primären OH-Gruppen mindestens 3 : 1 beträgt, wobei die Komponenten A und B in einem Äquivalenzverhältnis NCO:OH-Gruppen von 0,5 : 1 bis 1,3 : 1 vorliegen.

## Beschreibung

Die vorliegende Erfindung betrifft einen neuen Pulverlack auf Basis von Kombinationen von organischen Polyhydroxylverbindungen mit organischen Polyisocyanaten als Vernetzer und die Verwendung dieses Pulverlackes bei der Herstellung von Beschichtungen auf beliebigen hitzeresistenten Substraten.

Hitzehärtbare pulverförmige Massen, die man durch Reaktion eines hydroxylgruppenhaltigen Harzes mit einem maskierten Polyisocyanat erhält, gehören zum Stand der Technik und werden weit verbreitet angewandt. Von den maskierten Polyisocyanaten haben sich als PUR-Pulverhärter ε-Caprolactam-blockierte Isophorondiisocyanataddukte durchgesetzt. Die mit diesen Härtern hergestellten PUR-Pulver nehmen infolge ihrer überlegenen Witterungs- und Wärmefarbstabilität eine hervorragende Stellung ein.

So werden in der DE-OS 21 05 777 als Härter von PUR-Pulvern wegen einer Reihe von Vorteilen insbesondere ε-Caprolactam-blockierte Addukte des Isophorondiisocyanats (abgekürzt: IPDI) und Di- bzw. Triolen genannt.

In der DE-OS 25 42 191 werden blockierte Polyisocyanate aus IPDI, ε-Caprolactam und einem Polyol, das ein Gemisch aus einem Diol und Triol ist, beansprucht, sowie deren Verwendung zur Herstellung (in Kombination mit einem Hydroxylgruppen enthaltenden Polymeren) von in der Hitze härtbaren pulverförmigen Überzugsmassen.

In der DE-OS 27 35 497 (≙ USP 4 246 308) werden pulverförmige PUR-Lacke aus hydroxylgruppenhaltigen Polyestern, Polyacrylaten oder Epoxidharzen beschrieben, die dadurch gekennzeichnet sind, daß als Polyisocyanatkomponente zur ε-Caprolactamblockierung das Isocyanatoisocyanurat und ggf. Oligomere zusammen mit monomerem IPDI eingesetzt werden.

In der DE-OS 27 07 656 (≙ USP 4 150 211) findet sich eine ähnliche Bindemittelkombination wie in der DE-OS 27 35 497, wobei als Härterkomponente ein partiell trimerisiertes IPDI/Hexamethylendiisocyanat/Toluylendiisocyanat-Gemisch, dessen freie NCO-Gruppen mit ε-Caprolactam blockiert sind, eingesetzt wird.

In der DE-OS 30 04 876 werden blockierte Polyisocyanate beansprucht, die aus ε-Caprolactam blockierten Addukten des IPDI und Polyolen bestehen, wobei die Addukte pro OH-Äquivalent 3,3 - 8 NCO-Äquivalente enthalten. Mit diesen blockierten IPDI-Addukten werden PUR-Pulverlacke hergestellt.

In der DE-OS 31 43 060 werden PUR-Pulver beschrieben, die als Härterkomponente Reaktionsprodukte enthalten, die durch Kettenverlängerung von IPDI mit einem aliphatischen Diamin und anschließende ε-Caprolactam-Blockierung erhalten werden.

Aus diesen mit ε-Caprolactam blockierten IPDI-Derivaten werden beim Einbrennen mit geeigneten Hydroxylverbindungen Lacke erhalten, die sich bei leichter Handbarkeit durch guten Verlauf, hohe Härte und Elastizität sowie gute Chemikalienbeständigkeit auszeichnen. Ein Nachteil dieser PUR-Pulverlacke ist jedoch die Einbrenntemperatur von ca. 180 - 200 °C. Ein weiterer Nachteil dieser PUR-Pulverlacke ist in der Abspaltung des ε-Caprolactams zu sehen, welche bei der Verarbeitung der Pulverlacke besondere Vorkehrungen zwecks Reinigung der Abluft und Wiedergewinnung des Blockierungsmittels unerläßlich macht.

Es hat nicht an Versuchen gefehlt, die hohen Einbrenntemperaturen durch Auswahl anderer Blockierungsmittel zu senken. So wurden z.B. Oxime (DE-OS 22 00 342, EP-OS 0 432 257, USP 3 857 818), Triazole (DE-OS 28 12 252), cyclische Amidine (DE-OS 27 44 721) oder sekundäre Amine (DE-OS 34 34 881) als Blockierungsmittel mit niedrigeren Aufspalttemperaturen für PUR-Pulverlackhärter vorgeschlagen.

Der prinzipielle Nachteil des Gehalts an Blockierungsmitteln im Pulverlack ist damit jedoch nicht behoben.

Dieser prinzipielle Nachteil des Gehalts an Blockierungsmitteln im Pulverlack konnte durch Verwendung von blokkierungsmittelfreien, linearen Uretdion- und Urethangruppen-haltigen IPDI-Derivaten, die endständig Urethan-, Harnstoff- oder freie NCO-Gruppen aufweisen (EP-A 0 045 994, EP-A 0 045 996 oder EP-A 0 045 998), beseitigt werden. Die Herstellung des Härters ist jedoch mit einer aufwendigen Technologie verbunden.

Das Gleiche gilt für die PUR-Pulverlacke der DE-OS 36 24 775, in der als Härterkomponente Polyisocyanate, die unterhalb 40 °C fest und oberhalb 150 °C flüssig sind und keine Blockierungsmittel für Isocyanatgruppen aufweisen, eingesetzt werden.

Aufgabe der vorliegenden Erfindung war es deshalb, blockierungmittelfreie PUR-Pulverlacke aufzufinden, die die Nachteile des Standes der Technik nicht aufweisen.

Diese Aufgabe konnte dadurch gelöst werden, daß als Härter feste Addukte cycloaliphatischer Diisocyanate mit freien NCO-Gruppen und als Harzkomponente sekundäre OH-Gruppen enthaltende Polymere eingesetzt wurden.

Gegenstand der vorliegenden Erfindung ist somit ein Pulverlack, enthaltend im wesentlichen ein Gemisch aus

A) einer pulverförmigen, unterhalb 50 °C festen und oberhalb 160 °C flüssigen Polyisocyanatkomponente der Formel I

$$R-\left[R^1-NCO\right]_n \quad (I),$$

wobei R: a) 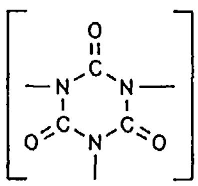 ;

b) 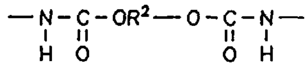 mit $R^2$: $C_2$–$C_{12}$–(Cyclo)–alkylen;

c) 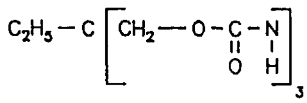 ;

d) 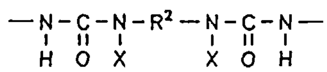 mit X : H und/oder $C_1$–$C_{12}$–(Cyclo)–alkyl;

$R^1$: 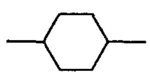 , 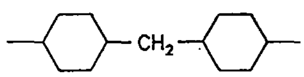 ;

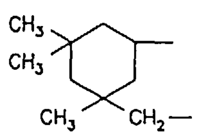 , 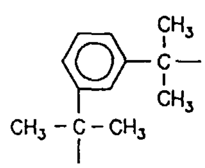 ;

und n: 2 – 5 bedeuten,

B) einer pulverförmigen, unterhalb 50 °C festen und oberhalb 160 °C flüssigen organischen Polyhydroxylkomponente, bei der das Verhältnis von sekundären zu primären OH-Gruppen mindestens 3 : 1 beträgt, wobei die Komponenten A und B in einem Äquivalenzverhältnis NCO:OH-Gruppen von 0,5 : 1 bis 1,3 : 1 vorliegen.

Gegenstand der Erfindung ist auch die Verwendung dieses Pulverlacks zur Herstellung von Beschichtungen sowie Verklebungen beliebiger hitzeresistenter Substrate nach den Methoden der Pulverlack-Technologie.

Ausgangsverbindungen zur Herstellung der Komponente A der erfindungsgemäßen Lackzusammensetzung sind folgende Diisocyanate: Isophorondiisocyanat (IPDI), Bis(4-isocyanatocyclohexyl)-methan ($H_{12}MDI$), $\alpha,\alpha,\alpha',\alpha'$-Tetramethyl-m-Xylylendiisocyanat (m-TMXDI) und Cyclohexan-1,4-diisocyanat (CHDI). Diese Diisocyanate werden einer Molekülvergrößerung, wie sie durch Trimerisierung, Reaktion mit unterschüssigen Mengen von Polyolen sowie Diaminen erreicht wird, unterworfen. Die Molekülvergrößerung durch Trimerisierung hat sich bei IPDI und $H_{12}MDI$ als zweckmäßig erwiesen. Hier werden die Diisocyanate bei 80 °C mit 0,2 - 0,4 % eines quaternären Ammoniumsalzes zu ca. 40 % umgesetzt. Das nicht umgesetzte Diisocyanat wird dann durch Dünnschichtdestillation vom Reaktionsprodukt entfernt. Diese Isocyanatgruppen enthaltenden Polyisocyanate werden bevorzugt für die Polyole B mit einer niedrigen OH-Funktionalität eingesetzt.

Die Molekülvergrößerung mit Polyolen ist auf alle oben aufgeführten Diisocyanate gleichermaßen gut anwendbar. Dabei wird das Diisocyanat mit dem Polyol im NCO:OH-Äquivalenzverhältnis von (1,5 - 2) : 1, bevorzugt 2 : 1, in der Schmelze bei 80 - 150 °C so lange erhitzt, bis pro OH-Äquivalent ein NCO-Äquivalent verbraucht worden ist. Als Polyol zur Kettenverlängerung der genannten Diisocyanate kommen grundsätzlich alle niedermolekularen Di- und Triole in Frage, besonders geeignet haben sich Ethylenglykol, Butandiol, Hexandiol, Decandiol, Dodecandiol, Neopentylglykol, 1,4-Dimethylolcyclohexan, 1.1.1-Trimethylolpropan, 1.2.6-Hexantriol erwiesen.

Bei der Molekülvergrößerung mit Diaminen wird zu dem auf 180 °C erhitzten Diisocyanat das Diamin portionsweise

so zugegeben, daß die Temperatur nicht über 220 °C steigt. Es wird dann so lange bei 220 °C weiter erhitzt, bis der zwischenzeitlich auftretende Niederschlag in Lösung gegangen ist. Wenn dies der Fall ist, wird sofort auf Raumtemperatur abgekühlt. Als Diamine kommen grundsätzlich alle primären wie sekundären niedermolekularen Diamine in Frage; bevorzugt kommen jedoch 2.2.4 (2.4.4)-Trimethylhexamethylendiamin, 2-Methylpentamethylendiamin, N.N'-Dihexyl-Isophorondiamin, N-iso-Propyl-Isophorondiamin, N-Cyclohexylpropan-1.3-diamin zum Einsatz.

Bei den für den erfindungsgemäßen Lack einzusetzende Polyolen B handelt es sich um sekundäre OH-Gruppen enthaltende Polymere, wie z. B. Epoxidharze auf Bisphenol A-Basis:

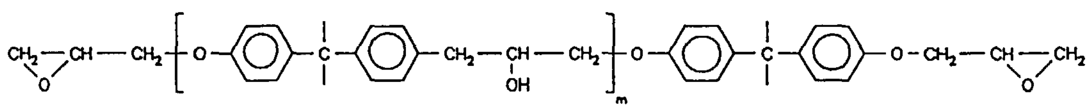

mit m = 2 - 10.

Diese EP-Harze werden in Kombination mit den festen Polyisocyanaten A bevorzugt zur Herstellung von Metallverklebungen eingesetzt.

Weitere als Polyole mit sekundären OH-Gruppen (Komponente B) einzusetzende hydroxylgruppenhaltige Verbindungen sind Polyester, die als wesentliche Bestandteile folgende Verbindungen einkondensiert enthalten:

1. Cyclische Polycarbonsäuren, wie Phthalsäure, Isophthalsäure, Terephthalsäure, Trimellithsäureanhydrid, Dimethylterephthalat sowie acyclische Polycarbonsäuren, wie z. B. Adipinsäure, 2.2.4(2.4.4)-Trimethyladipinsäure, Dodecandisäure,

2. Polyole, wie z. B. Ethylenglykol, 1.2-Propandiol, 1.3-Butandiol, 2.2-Dimethylpropandiol, 4.4'-Dihydroxydicyclohexylpropan-2.2, 1.4-Cyclohexandiol, Trimethylolpropan.

Die Polyester werden in an sich bekannter Weise durch Verestern oder Umestern, gegebenenfalls in Gegenwart üblicher Katalysatoren, hergestellt, wobei durch geeignete Wahl des COOH/OH-Verhältnisses Endprodukte erhalten werden, deren Hydroxylzahl zwischen 25 und 250, bevorzugt zwischen 40 und 150, liegen.

Die Erweichungstemperaturen der Polyester müssen so niedrig liegen, daß sie sich bei Temperaturen zwischen 70 und 120 °C mit den zur Herstellung der erfindungsgemäßen Überzugsmittel notwendigen Zusätzen verarbeiten lassen. Die Erweichungspunkte müssen andererseits so hoch liegen, daß die aus den Polyestern gewonnenen erfingungsgemäßen Lacke zu nicht klumpenden, freifließenden Pulvern mit einer Teilchengröße von etwa 20 bis etwa 120 µm vermahlen werden können.

Eine einfache Methode zur Herstellung von Polyestern mit sekundären OH-Gruppen besteht in der Umesterung von primären OH-Gruppen enthaltenden Polyestern mit Milchsäuremethylester.

Bei einem weiteren Verfahren zur Herstellung von Polymeren mit sekundären OH-Gruppen werden Oligoamide mit endständigen $NH_2$-Gruppen mit Milchsäuremethylester bei 120 - 150 °C unter Abspaltung von Methanol umgesetzt. Die basischen Oligoamide werden in bekannter Weise durch Kondensation von aliphatischen Dicarbonsäuren bzw. deren Ester, wie z. B. Adipinsäure, 2.2.4(2.4.4)-Trimethyladipinsäure, Sebacinsäure, Decandicarbonsäure, Dodecandicarbonsäure und (cyclo) aliphatischen primären Diaminen, wie Hexamethylendiamin, 2.4.4 (2.2.4) -Trimethylhexamethylendiamin, Isophorondiamin, 4.4'-Diaminodicyclohexylmethan, 3.3'-Dimethyl-4.4'-diaminodicyclohexylmethan, Dodecandiamin hergestellt. Das Molgewicht der basischen Oligoamide, das zwischen 300 und 3000, bevorzugt 1000 - 2000, liegt, wird durch das Molverhältnis Diamin zu Dicarbonsäure eingestellt.

Bei den gegebenenfalls mitzuverwendenden Hilf- und Zusatzmitteln handelt es sich beispielsweise um Pigmente, wie z. B. Titandioxid, Verlaufsmittel, wie z.B. Polybutylacrylat oder solchen auf Basis von Polysilikonen. Zur Herstellung des gebrauchsfertigen Pulverlacks, der gleichzeitig als pulverförmiger 1K-Klebstoff eingesetzt werden kann, werden die Polyisocyanatkomponente A und die Polyhydroxylkomponente B miteinander gemischt und gegebenenfalls mit den Zusatzmitteln C versehen und beispielsweise auf Extrudern oder Knetern bei Temperaturen oberhalb des Schmelzbereiches der Einzelkomponenten, beispielsweise 80 - 120 °C, zu einem homogenen Material vereinigt. Der nach Abkühlen der Schmelze resultierende Feststoff wird anschließend gemahlen und durch Sieben von den Kornanteilen oberhalb 100 µm befreit. Zur Herstellung des gebrauchsfertigen Pulverlacks aus den Ausgangsmaterialien ist nur ein kurzzeitiges Erhitzen auf Temperaturen oberhalb des Schmelzbereichs der Einzelkomponenten erforderlich. Eine nennenswerte Reaktion zwischen den Komponenten A und B findet nicht statt. Wäre dies der Fall, so würde sich dies in starken Verlaufsstörungen des ausgehärteten Pulverlacks bemerkbar machen.

Der so hergestellte Pulverlack kann nach üblichen Pulverauftrags-Verfahren, wie z. B. elektrostatisches Pulverversprühen oder Wirbelsintern, auf die zu überziehenden Substrate aufgebracht werden. Die Härtung der Beschichtungen

erfolgt durch Erhitzen auf Temperaturen von 150 bis 180 °C, vorzugsweise 160 °C, während eines Zeitraumes von 10 - 30 Minuten. Man erhält harte, glänzende und elastische Überzüge mit hervorragenden Korrosionsschutzeigenschaften und einer sehr guten Wärmefarbstabilität. Die mit dem erfindungsgemäßen Pulverlack hergestellten Metallverklebungen weisen bei Raumtemperatur, wie auch höheren Temperaturen hohe Zugscherfestigkeiten (DIN 53 283) auf.

**Experimenteller Teil**

I. **Herstellung der NCO-Komponente**

1. 1000 Gew. T. IPDI wurden auf 80 °C erhitzt. Unter intensivem Rühren wurden 2 Gew.-T. Dabco® TMR (Fa. Air Products) zugegeben. Die Temperatur stieg auf 125 °C. Nach Erreichen dieses Temperaturmaximums war die Reaktion beendet. Der NCO-Gehalt des Reaktionsgemisches betrug 30,5 %.

In einem 2. Schritt wurde das nicht umgesetzte IPDI bei 180 °C/0,1 mbar im Dünnschichtverdampfer vom Reaktionsprodukt abgetrennt. Das Reaktionsprodukt hatte einen NCO-Gehalt von 17,2 %, einen IPDI-Gehalt von 0,5 %. Der Schmelzbereich lag bei 92 - 96 °C. Die mittlere NCO-Funktionalität betrug ca. 3,4.

2. Zu 444 Gew. T. IPDI wurden bei 100 °C 144 Gew. T. 1,4-Bis(hydroxymethyl)-cyclohexan (CHDM) zugegeben. Nach Beendigung der CHDM-Zugabe wurde noch so lange bei 100 °C weitererhitzt, bis der NCO-Gehalt des Reaktionsgemisches 14,1 % betrug.

Das Reaktionsprodukt hatte einen Schmelzbereich von 52 - 62 °C, einen Monomergehalt von 5,3 %. Die NCO-Funktionalität betrug 2.

II. **Herstellung der OH-Komponente**

1. Einsatzstoffe:

8.75 mol Dimethylterephthalat
1.0 mol Adipinsäuredimethylester
3.25 mol Terephthalsäure
13.25 mol Propandiol-1.2
0.75 mol Trimethylolpropan

Aus diesen Einsatzstoffen wurde nach bekannten Methoden ein Polyester mit den folgenden Kennzahlen hergestellt:

**Physikalische Daten:**

| | |
|---|---|
| OH-Zahl : | 48 $\frac{\text{mg KOH}}{\text{g}}$ |
| Säurezahl : | 6 $\frac{\text{mg KOH}}{\text{g}}$ |
| Methylesterendgruppen : | 0,4 $\frac{\text{mg KOH}}{\text{g}}$ |
| Schmelzbereich : | 84 - 90 °C |
| Glasumwandlungstemp. (DTA) : | 55- 62 / 57 °C |
| Molverhältnis: sek. OH: prim. OH : | 4,1 : 1 |

(bestimmt durch NMR)

2. **Epoxidgruppen enthaltendes Polyol**

In den Anwendungsbeispielen wurde als Polyolkomponente ein hydroxylgruppenhaltiges Epoxidharz der Fa. Shell eingesetzt. Das EP-Harz ist gemäß dem Hersteller durch folgende Kennzahlen charakterisiert.

| | |
|---|---|
| EP-Äquivalentgew. : | 875 - 975 |
| OH-Äquivalentgew. : | ca. 300 |
| Schmelzpunkt [°C] : | 96 - 104 |

3. In den Anwendungsbeispielen wurde als Polyolkomponente ein weiteres EP-Harz der Fa. Shell eingesetzt. Dieses EP-Harz ist gemäß dem Hersteller durch folgende Kennzahlen charakterisiert.

EP-Äquivalentgewicht : 450 - 500
OH-Äquivalentgewicht : ca. 310
Schmelzpunkt [°C] : 64 - 74

III. **Reaktivitätsvergleich von Polyolen mit primären und sekundären OH-Gruppen gegenüber Polyisocyanaten**

Einen guten Hinweis über die Reaktivität eines Harz/Härter-Gemisches erhält man, indem dieses Gemisch in einer Knetkammer bei Temperaturen von 100 - 120 °C geknetet wird, und der Knetwiderstand in Abhängigkeit der Zeit verfolgt wird. In dem Maße, wie die Reaktion eintritt, steigt die Viskosität und damit der Knetwiderstand. Tritt Vernetzung ein, so ist dies mit einem steilen Anstieg des Knetwiderstandes verbunden, der allerdings sofort wieder stark (fast auf Null) abfällt. Das vernetzte Produkt wird fein zerrieben und bereitet den Knetern kaum noch Widerstand.

Tabelle 1

| Knetverhalten von Polyolen und Polyisocyanaten im Brabender-Plastographen | | | | |
|---|---|---|---|---|
| **Polyol** | **Polyisocyanat** | **OH:NCO** | **Knetdauer [min] bis zur Vernetzung bei** | |
| | | | **100 °C** | **120 °C** |
| a) * Alftalat AN 739 (Oxyester mit prim. OH-Gruppen) | I. 1 | 1 : 1 | vernetzt beim Einfüllen | - |
| b) Alftalat AN 739 | I. 2 | 1 : 1 | 1 | - |
| c) II. 2 | I. 1 | 1 : 1 | 32 | 13 |
| d) II. 2 | I. 2 | 1 : 1 | 35 | 17 |

* Polyester der Fa. Hoechst; OH-Z: 56-60 $\frac{mg\ KOH}{g}$ ; dieser Polyester wird in Kombination mit blockierten IPDI-Addukten zur Herstellung von PUR-Pulvern eingesetzt.

IV. **Herstellung von Pulverlacken**

49,6 Gew.-T. des hydroxylgruppenhaltigen Polyesters II. 1, 10.4 Gew.-T. des gemäß Beispiel I. 1 hergestellten Polyisocyanats und 40 Gew.-T. Weißpigment, $TiO_2$, KRONOS RN 57 P® wurden in einem Feststoffmischer innig vermengt und anschließend bei einer Massetemperatur von 95 - 100 °C extrudiert. Die erstarrte Schmelze wurde auf eine Korngröße < 100 µm gemahlen. Der so erhaltene Pulverlack wurde elektrostatisch auf 1 mm Stahlprüfbleche appliziert.

Die Lacke wurden unter verschiedenen Härtungsbedingungen eingebrannt und nach 24 h einer lacktechnischen Abprüfung unterworfen.

| Einbrennbedingungen | | SD | HK | HB | ET | GS | Impact reverse | GG 60 °∡ |
|---|---|---|---|---|---|---|---|---|
| Zeit / Temp. | | | | | | | | |
| min / °C | | | | | | | | |
| 30 | 180 | 60-70 | 195 | 111 | > 10 | 0 | > 944,6 | 89 |
| 20 | 180 | 65-80 | 193 | 111 | > 10 | 0 | > 944,6 | 88 |
| 30 | 160 | 50-60 | 188 | 125 | > 10 | 0 | > 944,6 | 91 |
| 20 | 160 | 60-70 | 192 | 111 | 5,6-7,1 | 0 | 115,2 | 92 |

Die Abkürzungen in der Tabelle bedeuten:

| | | |
|---|---|---|
| SD | ≙ | Schichtdicke in µm |
| HK | ≙ | Pendeldämpfung nach König in sec (DIN 53 157) |
| HB | ≙ | Härte nach Bucholz (DIN 53 153) |
| ET | ≙ | Tiefung nach Erichsen in mm (DIN 53 156) |
| GS | ≙ | Gitterschnittprüfung (DIN 53 151) |
| GG 60 °∡ | ≙ | Messung des Glanzes nach Gardner (ASTM-D 523) |
| Imp. rev. | ≙ | Impact reverve in g.m |

V. **Metallverklebungen mit dem erfindungsgemäßen Pulverlack**

Das OH-Gruppen enthaltende B wurde mit dem Polyisocyanat A im OH:NCO-Verhältnis 2 : 1 sowie 1 : 1 intensiv gemischt und bei 100 °C extrudiert, fein gemahlen und auf die zu verklebenden, mit Scotch Brite gereinigten Stahlbleche (1,5 mm dick) aufgesiebt, die bis zum beendeten Abbinden mit Schraubzwingen fixiert wurden. Die Härtung erfolgte bei 180 °C. Die Zugscherfestigkeiten dieser nach DIN 53 283 verklebten Stahlbleche sind in der nachfolgenden Tabelle aufgelistet (siehe Tabelle 3).

Tabelle 3

| Zusammensetzung des pulverförmigen 1 K-Klebstoff | | | | | St / St ZSF $N/mm^2$ (DIN 53 283) | |
|---|---|---|---|---|---|---|
| Beispiel Nr. | Härter | Harz | Mischungsverhältnis NCO : OH | Härtung | Raumtemperatur | 80 °C |
| 1 | I.1 | II.2 | 1 : 1 | 30 min bei 180 °C (für 1–7) | 12 | 13 |
| 2 | I.1 | II.2 | 1 : 2 | | 16 | 14 |
| 3 | I.2 | II.2 | 1 : 1 | | 11 | 11 |
| 4 | I.2 | II.2 | 1 : 2 | | 19 | 15 |
| 5 | I.1 | II.3 | 1 : 1 | | 16 | 16 |
| 6 | I.1 | II.3 | 1 : 2 | | 11 | 10 |
| 7 | I.2 | II.3 | 1 : 1 | | 18 | 16 |
| 8 | I.2 | II.3 | 1 : 2 | | 10 | 11 |

St: Stahl

ZSF: Zugscherfestigkeit

**Patentansprüche**

1. Pulverlack, enthaltend im wesentlichen ein Gemisch aus

A) einer pulverförmigen, unterhalb 50 °C festen und oberhalb 160 °C flüssigen Polyisocyanatkomponente der Formel I

$$R-[R^1-NCO]_n \quad (I),$$

wobei R: a) 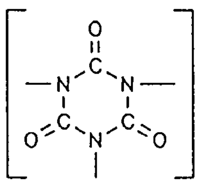 ;

b) 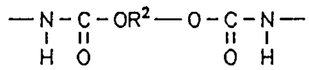 mit $R^2$: $C_2$–$C_{12}$–(Cyclo)–alkylen;

c) 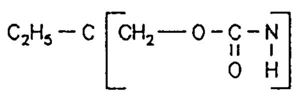 ;

d) 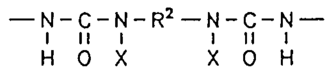 mit X : H und/oder $C_1$–$C_{12}$–(Cyclo)–alkyl;

$R^1$: 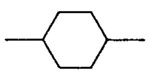 , 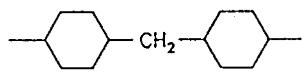 ;

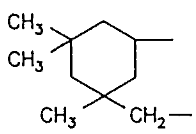 , 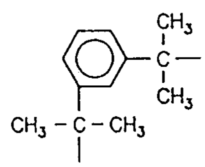 ;

und n: 2 – 5 bedeuten,

B) einer pulverförmigen, unterhalb 50 ° C festen und oberhalb 160 °C flüssigen organischen Polyhydroxylkomponente, bei der das Verhältnis von sekundären zu primären OH-Gruppen mindestens 3 : 1 beträgt, wobei die Komponenten A und B in einem Äquivalenzverhältnis NCO:OH-Gruppen von 0,5 : 1 bis 1,3 : 1 vorliegen.

**2.** Pulverlack nach Anspruch 1, dadurch gekennzeichnet, daß er zuzätzlich aus der Pulverlack-Technologie bekannte Hilfs- und Zusatzmittel enthält.

**3.** Pulverlack nach den Ansprüchen 1 oder 2, dadurch gekennzeichnet, daß als Komponente A Diisocyanate ausgewählt aus der Gruppe Isophorondiisocyanat (IPDI), Bis(4-isocyanatocyclohexyl)-methan ($H_{12}$MDI), α,α,α',α'-Tetramethyl-m-Xylylendiisocyanat (m-TMXDI) und Cyclohexan-1,4-diisocyanat (CHDI), enthalten sind.

**4.** Pulverlack nach einem der vorherigen Ansprüche 1 bis 3, dadurch gekennzeichnet, daß die Diisocyanate A kettenverlängert sind.

**5.** Pulverlack nach Anspruch 4, dadurch gekennzeichnet,

daß die Kettenverlängerung durch Trimerisierung oder mit unterschüssigen Mengen von Polyolen oder Diaminen erfolgt.

6. Pulverlack nach Anspruch 5,
dadurch gekennzeichnet,
daß Polyole ausgewählt aus der Gruppe Ethylenglykol, Butandiol, Hexandiol, Decandiol, Dodecandiol, Neopentylglykol, 1,4-Dimethylolcyclohexan, 1.1.1-Trimethylolpropan, 1.2.6-Hexantriol, enthalten sind.

7. Pulverlack nach Anspruch 5,
dadurch gekennzeichnet,
daß Diamine ausgewählt aus der Gruppe 2.2.4 (2.4.4)-Trimethylhexamethylendiamin, 2-Methylpentamethylendiamin, N.N'-Dihexyl-Isophorondiamin, N-iso-Propyl-Isophorondiamin, N-Cyclohexylpropan-1.3-diamin, enthalten sind.

8. Pulverlack nach den Ansprüchen 1 bis 7,
dadurch gekennzeichnet,
daß als Komponente B Epoxidharze auf Basis Bisphenol A enthalten sind.

9. Pulverlack nach den Ansprüchen 1 bis 8,
dadurch gekennzeichnet,
daß als Polyole Polyester enthalten sind, wobei diese die folgenden Bestandteile einkondensiert enthalten:

   1. Cyclische Polycarbonsäuren, wie Phthalsäure, Isophthalsäure, Terephthalsäure, Trimellithsäureanhydrid, Dimethylterephthalat sowie acyclische Polycarbonsäuren, wie z. B. Adipinsäure, 2.2.4(2.4.4)-Trimethyladipinsäure, Dodecandisäure, und

   2. Polyole, wie z. B. Ethylenglykol, 1.2-Propandiol, 1.3-Butandiol, 2.2-Dimethylpropandiol, 4.4'-Dihydroxydicyclohexylpropan-2.2, 1.4-Cyclohexandiol, Trimethylolpropan.

10. Pulverlack nach den Ansprüchen 1 bis 9,
dadurch gekennzeichnet,
daß als Komponente B sekundäre OH-Gruppen aufweisende Oligoamide enthalten sind.

11. Verwendung des Pulverlacks gemäß den Ansprüchen 1 bis 10 zur Herstellung von Beschichtungen sowie Verklebungen beliebiger hitzeresistenter Substrate nach den Methoden der Pulverlack-Technologie.

Europäisches Patentamt

# EUROPÄISCHER RECHERCHENBERICHT

Nummer der Anmeldung
EP 96 11 6397

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br>Y | EP-A-0 669 351 (BAYER) 30.August 1995<br>* Seite 4, Zeile 35 - Seite 5, Zeile 30 *<br>* Seite 5, Zeile 52 - Seite 5, Zeile 57 *<br>* Seite 7, Zeile 6 - Seite 7, Zeile 18 *<br>* Ansprüche 1,4,7 *<br>* Beispiele 1-9 *<br>--- | 1-7,9,11<br>4,7,8,10 | C08G18/64<br>C08G18/42<br>C08G18/48<br>C08G18/79<br>C08G18/80<br>C09D5/46 |
| X<br><br>Y | NL-A-9 201 868 (DSM) 16.Mai 1994<br><br>* Seite 2, Zeile 14 - Seite 4, Zeile 11 *<br>* Seite 5, Zeile 19 - Seite 5, Zeile 23 *<br>--- | 1-3,5,6,<br>9,11<br>4,7,8,10 | |
| A | EP-A-0 652 263 (BAYER) 10.Mai 1995<br>* Ansprüche 1,2 *<br>--- | 1-11 | |
| A | EP-A-0 669 353 (HUELS) 30.August 1995<br>* Seite 5, Zeile 6 - Seite 5, Zeile 18 *<br>* Seite 5, Zeile 44 - Seite 6, Zeile 6 *<br>* Ansprüche 1,4,15 *<br>--- | 1-11 | |
| A,D | EP-A-0 254 152 (BAYER) 27.Januar 1988<br>* Seite 6, Zeile 34 - Seite 7, Zeile 3 *<br>* Ansprüche 1,2 *<br>----- | 1-11 | RECHERCHIERTE SACHGEBIETE (Int.Cl.6)<br>C08G<br>C09D |

Der vorliegende Recherchenbericht wurde für alle Patentansprüche erstellt

| Recherchenort | Abschlußdatum der Recherche | Prüfer |
|---|---|---|
| MÜNCHEN | 22.Januar 1997 | Heidenhain, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)